Europäisches Patentamt

(19) European Patent Office

Office européen des brevets

(11) **EP 1 475 606 A1**

(12) **EUROPEAN PATENT APPLICATION**
published in accordance with Art. 158(3) EPC

(43) Date of publication:
**10.11.2004 Bulletin 2004/46**

(51) Int Cl.$^7$: **G01B 9/02**

(21) Application number: **03710558.2**

(22) Date of filing: **10.02.2003**

(86) International application number:
**PCT/RU2003/000041**

(87) International publication number:
**WO 2003/069272 (21.08.2003 Gazette 2003/34)**

(84) Designated Contracting States:
**AT BE BG CH CY CZ DE DK EE ES FI FR GB GR HU IE IT LI LU MC NL PT SE SI SK TR**

(30) Priority: **14.02.2002  US 356798 P**

(71) Applicant: **Imalux Corporation .**
**Cleveland, Ohio 44114 (US)**

(72) Inventors:
• **AMAZEEN, Paul, Gerard**
**New Castle, NH 03854 (US)**

• **GELIKONOV, Valentin Mikhailovich**
**Nizhny Novgorod, 603136 (RU)**
• **FELDCHTEIN, Felix Isaakovich**
**Cleveland, OH 44143 (US)**
• **GELINKONOV, Grigory Valentinovich**
**Nizhny Novgorod, 603136 (RU)**

(74) Representative: **Roos, Peter et al**
**Klinger & Kollegen**
**Bavariaring 20**
**D-80336 München (DE)**

(54) **METHOD FOR STUDYING AN OBJECT AND AN OPTICAL INTERFEROMETER FOR CARRYING OUT SAID METHOD**

(57)    The present invention relates to the study of internal structure of objects by optical means. According to one modification of the inventive method and optical interferometer, the optical path for the low coherence optical radiation directed to the object (8), is bi-directional, and the optical path for the low coherence reference optical radiation is unidirectional. This makes splitting and mixing ratios completely independent, the later providing for optimal power management of the source (1) of optical radiation. According to another modification of the inventive method and optical interferometer, the reference optical path for reference optical radiation is designed as a loop (23). A part of said reference optical radiation propagates clockwise in the reference loop, whereas the other part of said reference optical radiation propagates counterclockwise in the reference loop. In this modification the beam splitting ratios can be optimized by making beam splitters (21) and (24) non-reciprocal or polarization-dependent and by placing polarization-changing elements between the beam splitters (21) and (24) and/or into the measuring arm and the reference loop. Thus both modifications of the inventive method and optical interferometer make possible to ensure highly efficient use of optical source power together with optimal signal-to-noise ratio for a given optical source power.

Fig. 3

## Description

Technical Field

The present invention relates to physical engineering, in particular, to studies of internal structures of objects with the aid of optical means, and can be used in low coherence reflectometers and devices for optical coherence tomography applied, for example, for medical diagnostics of individual organs and systems including in vivo or in vitro diagnostics, as well as for industrial diagnostics such as control of technological processes.

Background Art

A virtue of optical interferometers applied for studying objects with the use of short coherence optical radiation is a potential for acquisition of images of turbid media with high spatial resolution as well as noninvasive diagnostics in medical studies and nondestructive control in diagnostics of various equipment.

Optical interferometers being part of low coherence reflectometers and devices for optical coherence tomography are well known (see, for example, U.S. Pat. No. 5,321,501; U.S. Pat. No. 5,383,467; U.S. Pat. No. 5,459,570; U.S. Pat. No. 5,582,171; U.S. Pat. No. 6,134,003; International application No. WO 00/16034). Sometimes the optical interferometer is fully or partially implemented by using bulk optic elements (U.S. Pat. No. 5,383,467), but more often optical interferometers for these applications are made fiberoptic (U.S. Pat. No. 5,321,501; U.S. Pat. No. 5,459,570; U.S. Pat. No. 5,582,171).

The optical interferometer is typically designed as a Michelson interferometer (see X. Clivaz et al., High Resolution Reflectometry in Biological Tissues, Optics Letters, vol. 17, No. 1/Jan. 1, 1992, and also J. A. Izatt, J. G. Fujimoto et al., Optical Coherence Microscopy in Scattering Media, Optics Letters, vol. 19, No. 8/Apr. 15, 1994, p.590-592) or as a Mach-Zehnder interferometer (see J. A. Izatt, J. G. Fujimoto et al., Micron-Resolution Biomedical Imaging with Optical Coherence Tomography, Optics & Photonics News, October 1993, vol. 4, No. 10, p.14-19, and also USA Patent No. 5,582,171). Regardless of the specific design used, an optical interferometer typically comprises a short coherence light source, one or two beam splitters, measuring and reference arms, and at least one photodetector. The measuring arm includes, as a rule, an optical measuring probe, the end of the reference arm being provided with a reference mirror (see A. Sergeev et al., In Vivo Optical Coherence Tomography of Human Skin Microstructure, Proc. SPIE, v. 2328, 1994, p. 144, and also X. J. Wang et al., Characterization of Human Scalp Hairs by Optical Low Coherence Reflectometry. Optics Letters, vol. 20, No. 5, 1995, pp. 524-526).

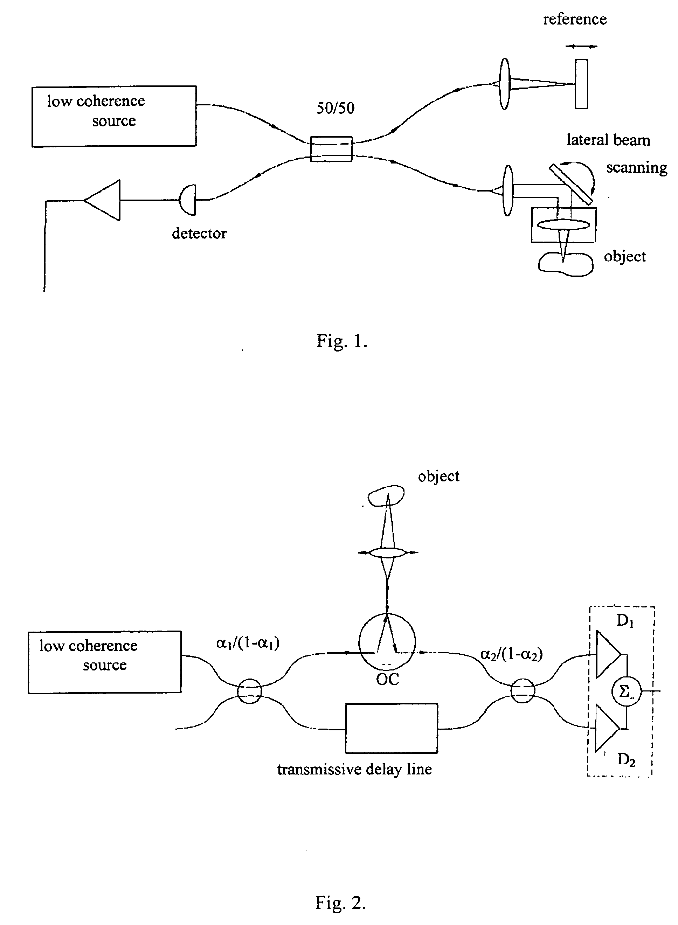

In a Michelson interferometer (Fig. 1) the measuring and reference arms are bi-directional with a reference mirror placed at the end of the reference arm. For performing in-depth scanning the reference mirror either is connected to a device for moving said mirror mechanically (U.S. Pat. No. 5,321,501; U.S. Pat. No. 5,459,570), or its position is fixed and the in-depth scanning is performed with a piezoelectric scanning element (RU Pat. No. 2,100,787), or with a dispersion-grating optical delay line (K. F. Kwong, D. Yankelevich et al., 400-Hz Mechanical Scanning Optical Delay Line, Optics Letters, vol. 18, No. 7, April 1, 1993).

The Michelson interferometers shown in background art, all execute intrinsically the same method for studying an object (see U.S. Pat. No. 5,321,501; U.S. Pat. No. 5,383,467; U.S. Pat. No. 5,459,570; RU Pat. No. 2,148,378). According to this method, a low coherence optical radiation beam is split into two beams. One of the beams is directed towards an object along a measuring optical path and focused on the object, while the other one is directed along a reference optical path. The low coherence optical radiation that passed along the measuring optical path in a forward and backward direction is combined with the low coherence optical radiation that passed along the reference optical path in a forward and backward direction, both the measuring and reference paths being bi-directional. Then the intensity of the low coherence optical radiation, which having passed along the measuring optical path carries information about the object, is visualized using a signal of interference modulation of the intensity of the optical radiation, which is a result of said combination.

The major drawback of Michelson interferometers, as well as of the executed method, is the low efficiency of use of optical source power. Even with the optimal splitting ratio in the coupler, which is 0.5 for a reciprocal configuration, a substantial portion of the input power is wasted in the reference arm and in the back way from the coupler/splitter to the light source. In addition, the optical radiation in the mentioned back way, contains an AC component representing the useful interference signal, whose amplitude is proportional to the one detected by the photodetector. This component could be used in another interferometer configuration to improve the signal-to-noise ratio (SNR), but is wasted in the Michelson interferometer and moreover, negatively impacts most known sources of a broadband optical radiation (e.g., semiconductor superluminescent diodes, doped-fiber amplified spontaneous emission superlums, solid state and fiberoptic femtosecond lasers).

A Mach-Zehnder interferometer (Fig2) doesn't return any substantial optical power back to the source and is more flexible in power splitting and coupling between arms because two different couplers are used for splitting optical radiation between reference and measuring arms and for combining optical radiation. Also, the second optical channel containing an anti-phase AC interference component is easily available and typically used in a differential detection arrangement to improve the SNR. Since it has unidirectional arms, it requires an optical circulator in the measuring arm to work with reflective samples (which is so far the only practical way to use low-coherence interferometry for biotissue imaging because penetration depth is fundamentally limited by light scattering to 2-3 mm and human and animal tissues and organs are much thicker). The most natural way for in-depth scanning with the Mach-Zehnder interferometer is with an in-line (transmissive) delay line, for example, a piezofiber optical delay. It is more common in the art to use reflecting delay lines based on a moving mirror, diffraction grating line, rotating mirrors, prisms, cams, and helicoid mirrors, but with the expense of another optical circulator added into the reference arm. In comparison with the Michelson interferometer, a transmissive delay line can only provide 50% of optical path modulation (and therefore 50% scanning depth) for the same delay element because of unidirectional rather than bi-directional operation.

Mach-Zehnder interferometers execute a slightly different method described, for example, in U.S. Pat. No. 6,485,413, and in International application No. WO 00/16034. According to this method, a low coherence optical radiation beam is split into two beams. One of the beams is directed towards an object along a first part of a unidirectional measuring optical path and focused on the object. The other beam is directed along a unidirectional reference optical path. The low coherence optical radiation that carries information about the object is directed along a second part of the unidirectional measuring optical path with the help of an additional optical system. Then optical radiations, which passed along the measuring and reference optical paths in a forward direction, are combined. The intensity of the low coherence optical radiation, which having passed along the measuring optical path and carries information about the object, is visualized using a signal of interference modulation of the intensity of the resulting combined optical radiation. This method coupled with the Mach-Zehnder interferometer provides highly efficient use of the source power.

In-depth scanning of the object in both methods can be implemented by changing the difference in the optical lengths of the optical paths for the first and the second optical radiation beams. Lateral scanning of the object may also be carried out by the invention.

A hybrid method for studying an object is known from International application No. WO 00/16034. According to this method, a low coherence optical radiation beam is split into two beams. One of the beams is directed towards an object along a first part of a unidirectional measuring optical path, while the other beam is directed along a bi-directional reference optical path. The low coherence optical radiation that carries information about the object is then directed along a second part of the unidirectional measuring optical path with the help of an additional optical system. Then optical radiations, which passed along the unidirectional measuring path in a forward direction and along the bi-directional reference optical path in a forward and backward direction are combined and the intensity of the low coherence optical radiation, which having passed along the measuring path carries information about the object, is visualized using a signal of interference modulation of the intensity of the optical radiation, which is a result of said combination.

The hybrid interferometer described in the same International application No. WO 00/16034 (Fig. 3) comprises a low coherence light source, two beam splitters, measuring and reference arms, and at least one photodetector. The low coherence light source is connected to the first port of the first beam splitter. The measuring arm is unidirectional and comprises two parts, the first part being connected to the second port of the first beam splitter. The first part of the measuring arm is provided with a probe, the latter including an optical system for focusing the first beam of the low coherence optical radiation on the object. The second part of the measuring arm is provided with an additional optical system for collecting light from the object and taking the optical radiation, which carries information about the object, to the first port of the second beam splitter. The third port of the first beam splitter is connected with the third port of the second beam splitter. The fourth port of the first beam splitter is connected to the reference arm, which is bi-directional, the distal end of the reference arm being provided with a reference mirror. A respective photodetector is connected to the second and fourth ports of the second beam splitter.

A drawback of the hybrid method, as well as the hybrid interferometer described in the International application No. WO 00/16034, is the necessity of an additional optical system for collecting light carrying information about the object. The two optical systems (illuminating and collecting light) must be aligned and synchronously targeted to the same point in the object with micron accuracy (the typical beam diameter at the tissue surface should be 15-30 $\mu$m), since even one beam diameter mismatch will lead to a complete loss of optical power collected by the second part of the measuring arm. In addition, some portion of the reference arm power inevitably returns back to the source, which may negatively impact the source performance.

Disclosure of invention

The present invention is directed to a method and apparatus to expand the family of methods and optical interferometers, designed for studying samples with the use of low coherence optical radiation, which ensure highly efficient use of optical source power together with optimal signal-to-noise ratio for a given optical source power and are simple and cost-effective, i. e., to provide modifications of methods and optical interferometers with performance parameters, at least, not worse than those of the best optical interferometers known from prior art.

According to the first modification of the developed method for studying an object similarly to the method known from the International application No. WO 00/16034, it comprises the steps of splitting the low coherence optical radiation into a first beam of the low coherence optical radiation and second beam of the low coherence optical radiation, directing the first beam of the low coherence optical radiation towards the object under study along a measuring optical path, directing the second beam of the low coherence optical radiation along a reference optical path, combining the low coherence optical radiation, which passed along the measuring optical path with the low coherence optical radiation, which passed along the reference optical path, and visualizing the intensity of the low coherence optical radiation, which having passed along the measuring optical path carries information about the object, using for that at least one signal of interference modulation of the intensity of the low coherence optical radiation, which is a result of said combining.

Unlike the known method, according to the invention the first beam of the low coherence optical radiation passes along the measuring optical path, which is bi-directional, in a forward and backward direction, whereas the second beam of the low coherence optical radiation passes along the reference optical path, which is unidirectional, in a forward direction.

In one embodiment in-depth scanning of the object under study is performed by changing therewith the difference in the optical lengths of the optical paths for the first and second low coherence optical radiation beams.

In a particular embodiment the difference in the optical lengths of the optical paths for the first and second low coherence optical radiation beams is changed by at least several tens of wavelengths of low coherence optical radiation.

In a different embodiment the first beam of the low coherence optical radiation being directed to the object under study is scanned in compliance with a predetermined rule over a surface, which is approximately perpendicular to the direction of propagation of the first beam.

In a particular embodiment the object under study is a biotissue of a living body.

In another particular embodiment the low coherence optical radiation is an optical radiation in the visible or near IR range.

According to the second modification of the developed method for studying an object, similarly to the method known from the International application No. WO 00/16034, it comprises the steps of forming a low coherence optical radiation, which is split into a first beam of the low coherence optical radiation and second beam of low coherence optical radiation, directing the first beam of the low coherence optical radiation along a measuring optical path, directing the second beam of the low coherence optical radiation along a reference optical path, combining the low coherence optical radiation, which passed along the measuring optical path with the low coherence optical radiation, that has propagated along the reference optical path, and visualizing the intensity of the low coherence optical radiation, which having passed along the measuring optical path carries information about the object, using for that at least one signal of interference modulation of intensity of the optical radiation, which is a result of said combining.

Unlike the known method, according to the invention the reference optical path is formed as a loop, the first beam of the low coherence optical radiation is split into a third beam of the low coherence optical radiation and fourth beam of low coherence optical radiation. The third beam of the low coherence optical radiation is directed towards the object, the fourth beam of the low coherence optical radiation is directed clockwise in the reference loop while the second beam of the low coherence optical radiation is directed counterclockwise in the reference loop. The third beam of the low coherence optical radiation propagates along the measuring optical path in a forward and backward direction, the measuring optical path being bi-directional, whereas the low coherence optical radiation, which returned from the object, is then combined with the second beam of low coherence optical radiation, which has propagated counterclockwise in the reference loop. Part of the optical radiation, which is a result of said combining, is further combined with the fourth beam of the low coherence optical radiation that has propagated clockwise in the reference loop.

The first modification of the developed optical interferometer, similarly to the hybrid optical interferometer, known from the International application No. WO 00/16034, comprises a source of optical radiation, a first beam splitter, a measuring arm and a reference arm, a second beam splitter, and at least one photodetector optically coupled to a respective port of the second beam splitter.

Unlike the known optical interferometer, according to the invention the measuring arm is bi-directional, whereas the reference arm is unidirectional.

In one embodiment of the first modification of the optical interferometer at least one of the arms of the optical interferometer comprises an optical delay line.

In another embodiment at least one of the arms of the optical interferometer comprises a phase modulator.

In a different embodiment the measuring arm is provided with a probe located at its distal end.

In a particular embodiment at least a part of the measuring arm comprising the probe is designed fiberoptic.

In another particular embodiment at least one of the arms of the optical interferometer is designed fiberoptic.

In a different embodiment at least one of the beam splitters is designed fiberoptic.

In another embodiment the probe is made detachable and connected with the rest of the optical interferometer by a connecter.

In another embodiment the first beam splitter is designed nonreciprocal.

In a different embodiment the first beam splitter is designed polarization-sensitive and the measuring arm is provided with a polarization switch.

The second modification of the developed optical interferometer, similarly to the hybrid optical interferometer, known from the International application No. WO 00/16034, comprises a source of optical radiation, a first beam splitter, a measuring arm and a reference arm, a second beam splitter, and at least one photodetector.

Unlike the known optical interferometer, according to the invention the measuring arm is bi-directional, whereas the reference arm is formed as a loop. The first beam splitter is optically coupled to the object through the ports of the second beam splitter, at least one of the beam splitters being optically coupled to a respective photodetector.

In one embodiment of the second modification of the optical interferometer at least one of the arms of the optical interferometer comprises an optical delay line.

In another embodiment at least one of the arms of the optical interferometer comprises a phase modulator.

In a different embodiment the measuring arm is provided with a probe located at its distal end.

In a particular embodiment at least a part of the measuring arm comprising the probe is designed fiberoptic.

In another particular embodiment at least one of the arms of the optical interferometer is designed fiberoptic.

In a different embodiment at least one of the beam splitters is designed fiberoptic.

In another embodiment the probe is made detachable and connected with the rest of the optical interferometer by a connecter.

In another embodiment the first beam splitter is designed nonreciprocal.

In a different embodiment the first beam splitter is designed polarization-sensitive and the measuring arm is provided with a polarization switch.

Developed variants of the method for studying an object and optical interferometer for carrying out said method present a bi-directional optical path for the low coherence optical radiation directed to the object, and a unidirectional optical path for the low coherence reference optical radiation. In the first variant the later makes splitting and mixing ratios completely independent, providing for optimal power management. In the second variant the reference path is designed as a loop, wherewith part of the reference optical radiation propagates clockwise in the reference loop, while the other part of the reference optical radiation propagates counterclockwise in the reference loop. In this modification the beam splitter ratios can be optimized in substantially the same way by making beam splitters non-reciprocal or polarization-dependent and by placing polarization-changing elements between the beam splitters and/or into the measuring arm and the reference loop. Both modifications of the invention allow for adjusting beam splitter ratio to assure optimal signal-to-noise ratio for a given optical source power.

Thus both modifications of the developed method and optical interferometer for carrying out said method ensure highly efficient use of an optical source power together with optimal signal-to-noise ratio and their performance parameters are, at least, not worse than those of the best analogous technologies, known from prior art.

Brief Description of Drawings

Reference will be made in detail to preferred embodiments of the invention, examples of which may be illustrated in the accompanying drawing figures, where:

Fig. 1 shows a prior art Michelson optical interferometer.
Fig. 2 shows a prior art Mach-Zehnder optical interferometer.

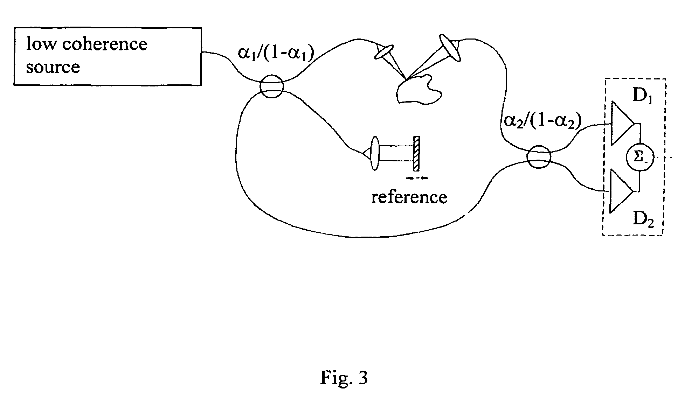

Fig. 3 shows a prior art hybrid optical interferometer.
Fig. 4 is a schematic diagram of one particular embodiment of a first modification of the developed optical interferometer, which can implement a first modification of the developed method.
Fig. 5 is a schematic diagram of one particular embodiment of a second modification of the developed optical interferometer, which can implement a second modification of the developed method.

Modes for Carrying out the Invention

Developed modifications of the optical interferometer are illustrated by means of examples of optical fiber interferometers being part of a device for optical coherence tomography, although it is evident that they can be implemented with the use of bulk optic elements, and can be used as independent devices. The fiberoptic implementation is preferable for use in medical applications, especially in endoscopy, where flexibility of fiberoptics provides convenient access to different tissues and organs, including internal organs via an endoscope. However, the whole interferometer, or any part of it, can be implemented using traditional bulk optics, e.g., mirrors, prisms etc. Any such modification of the hybrid interferometer with unidirectional reference arm and bi-directional measuring arm is included within the scope of this invention.

Operation of the first modification of the optical interferometer of the invention will be best understood from the following description of carrying out the first modification of the method for studying an object.

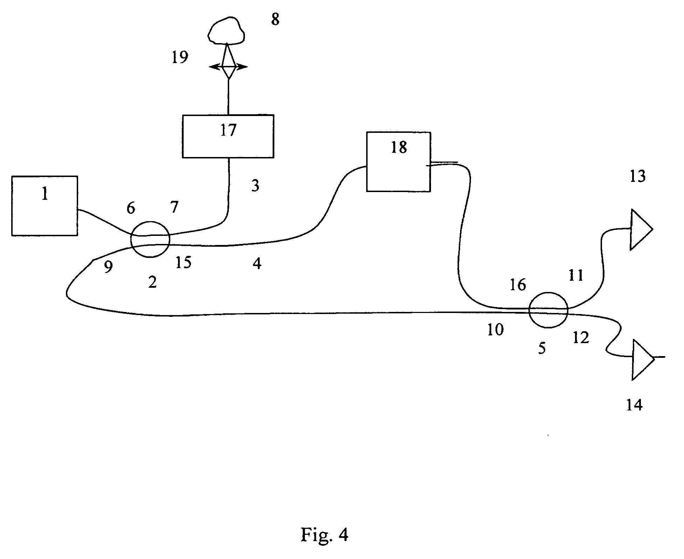

The method for studying an object is carried out the following way with the help of the optical interferometer of the invention, as depicted in Fig. 4.

A low coherence optical radiation beam is formed by means of an optical source 1, in a preferred embodiment, in the visible or IR range. The source 1 can be arranged, for example, as a semiconductor superluminescent diode, doped-fiber amplified spontaneous emission superlum, solid state or fiberoptic femtosecond laser. In the embodiment shown in Fig. 4, the source 1 is optically coupled to a first port 6 of a first beam splitter 2. The low coherence optical radiation beam is split into a first and second beam by means of a beam splitter 2. The first beam is directed to an object 8 along a measuring optical path by means of a measuring arm 3, which in the interferometer shown in Fig. 4 is connected to a second port 7 of the first beam splitter 2. The distal part of the measuring arm 3 can contain a probe 19 for convenient access to the object 8.

In the preferred embodiment, the probe 19 is made detachable and connected with the rest of the interferometer by a fiberoptic connecter. If the interferometer has polarization-maintaining fiber, the connector preferably should be polarization maintaining as well. The probe 19 can be implemented using any design known in the art, for example, an endoscope, endoscopic probe, catheter, guidewire, needle, or the probe 19 may be implanted into the body, providing instant access to the internal organ. If the probe 19 is designed to image circumference (e.g., a catheter for intravascular imaging), it can be connected to the interferometer of Fig. 4 using a rotary connecter.

The measuring optical path formed by the measuring arm 3 is bi-directional. Hence the first beam of the low coherence optical radiation propagates along the measuring optical path in a forward direction from the second port 7 of the first beam splitter 2 through a first optical delay line 17 to the object 8. At least part of the first beam is reflected from the object 8 and then propagates along the measuring optical path in a backward direction through the first optical delay line 17 to the second port 7 of the first beam splitter 2. From a third port 9 of the first beam splitter 2, optical radiation, which having passed along the measuring optical path carries information about the object 8, passes to a third port 10 of a second beam splitter 5.

The second optical beam is directed along a reference optical path by means of a reference arm 4, optically connected to beam splitter 2. In a preferred embodiment one end of the reference arm 4 is connected to a fourth port 15 of the first beam splitter 2, while the other end of the reference arm 4 is connected to a first port 16 of the second beam splitter 5. The reference optical path formed by the reference arm 4 is unidirectional. Therefore the second low coherence optical radiation beam propagates along the reference optical path in a forward direction from the fourth port 15 of the first beam splitter 2 through a second optical delay line 18 to the first port 16 of the second beam splitter 5. The first optical delay line 17 and second optical delay line 18 are designed to change the difference between optical path lengths of the measuring arm 3 and the reference arm 4, i.e. to perform in-depth scanning of the object 8.

In the preferred embodiment, as depicted in Fig. 4, the first optical delay line 17 and the second optical delay line 18 are in-line similar piezofiber delay lines known from RU Pat. No. 2,100,787 (US Pat. No. 5,867,268). Optical delay lines 17 and 18 are driven synchronously with appropriate polarity to combine the effect (not shown in the drawing). However, all other known in the art optical path modulation means can be used, such as delay lines based on moving mirror(s), moving prism(s), diffraction grating line, rotating mirrors, prisms, cams and helicoid mirrors. Any reflective delay line can be converted into a transmissive line by using an optical circulator, as is well known in the art. Any known delay line can be used in one arm of the disclosed interferometer, or in both.

The low coherence optical radiation, which passed along measuring arm 3, is combined with the low coherence optical radiation, which passed along reference arm 4, by means of the second beam splitter 5. The first optical delay line 17 and the second optical delay line 18 provide a change in the difference between optical path lengths of the measuring arm 3 and the reference arm 4, respectively, with a constant velocity v. The mentioned change in the difference of the optical path lengths of the measuring arm 3 and the reference arm 4 leads to interference modulation of the intensity of combined optical radiation at the second port 11 and fourth port 12 of the second beam splitter 5 at a Doppler frequency $f = v/\lambda$, where:

$$v = d\Delta/dt;$$

v is the velocity of changing the optical path difference $\Delta$; and
$\lambda$ is the central wavelength of source 1.

The rule of interference modulation corresponds to the change in the intensity of optical radiation reflected or backscattered by the object 8 at different depths. The result of said combining is then used to visualize the intensity of optical radiation, which having passed along the measuring arm 3 contains information about the object 8. The latter is done as follows.

A first photodetector 13 and a second photodetector 14, which can be made as photodiodes, are connected respectively to the second port 11 and the fourth port 12 of the second beam splitter 5. The first photodetectors 13 and the second photodetector 14 receive two antiphase AC interference signals produced by mixing Doppler frequency shifted (because of constant-speed in-depth scanning by the delay line) radiations from the reference arm 4 and the measuring arm 3. The first photodetector 13 and the second photodetector 14 provide for conversion of the combined optical radiations from the second port 11 and the fourth port 12 of the second beam splitter 5 into electrical signals that arrive at a differential amplifier (not shown in the drawing) and further at a processing and displaying unit (not shown in the drawing). The processing and displaying unit can be analogous to a processing and displaying unit described in RU Pat. No. 2,148,378. This data processing and displaying unit comprises a band-pass filter, a log amplifier, an amplitude detector, an analog-to-digital converter, and a computer, all elements being connected in series. The band-pass filter of the unit sorts the signal at a Doppler frequency, thereby improving the signal-to-noise ratio. Once the signal is amplified, it arrives at a detector that detects a signal proportional to the waveform envelope of this signal. The signal detected by the amplitude detector of the data processing and displaying unit is proportional to the signal of interference modulation of the intensity of the combined optical radiation. The analog-to-digital converter of the unit converts the signal from the output of the amplitude detector into a digital format. The computer of the data processing and displaying unit provides for acquisition of images by displaying on a video monitor the intensity of the digital signal (the displaying may be performed as described, for instance, in the paper by H. E. Burdick "Digital Imaging: Theory and Applications", 304 pp., McGraw Hill, 1997). Since the digital signal corresponds to the change in intensity of optical radiation reflected or backscattered from the object 8 at different depths, the image visualized on the monitor corresponds to an image of the object 8.

Operation of the second modification of the optical interferometer of the invention will be best understood from the following description of carrying out the second modification of the method for studying an object.

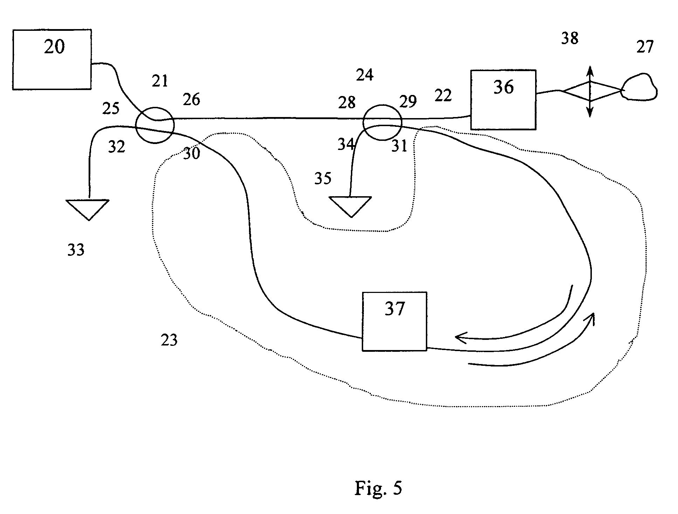

The method for studying an object is carried out the following way with the help of the optical interferometer of the invention, as depicted in Fig. 5.

A low coherence optical radiation beam is formed by means of an optical source 20, in a preferred embodiment, in the visible or IR range. The source 20 can be arranged similar to the source 1 of the optical interferometer shown in Fig. 4. In the embodiment shown in Fig. 5 the source 20 is optically coupled to a first port 25 of a first beam splitter 21. Said low coherence optical radiation beam by means of the first beam splitter 21 is split into two beams. A second port 26 of the first beam splitter 21 is optically coupled to an object 27 through a first port 28 and second port 29 of a second beam splitter 24. The first beam of the low coherence optical radiation is directed to the first port 28 of the second beam splitter 24. The first beam of the low coherence optical radiation is split into a third beam of the low coherence optical radiation and a fourth beam of the low coherence optical radiation by means of the second beam splitter 24. Said third beam of the low coherence optical radiation is directed to the object 27 along the measuring optical path by means of a measuring arm 22. The distal part of the measuring arm 22 can contain a probe 38 for convenient access to the object 27. The measuring optical path formed by the measuring arm 22 is bi-directional. Hence the third beam of the low coherence optical radiation propagates along the measuring optical path in a forward direction from the second port 29 of the second beam splitter 24 through a first optical delay line 36 to the object 27. At least part of the third beam of the low coherence optical radiation is reflected from the object 27 and then propagates along the measuring optical path in a backward direction through the first optical delay line 36 to the second port 29 of the second beam splitter 24.

The reference optical path is formed by means of a reference arm 23, designed as a loop. Therefore said fourth beam propagates clockwise in the reference loop/arm 23 from a fourth port 31 of the second beam splitter 24 through a second optical delay line 37 to a fourth port 30 of the first beam splitter 21. Said second beam of the low coherence optical radiation propagates counterclockwise in the reference loop/arm 23 from the fourth port 30 of the first beam splitter 21 through the second optical delay line 37 to the fourth port 31 of the second beam splitter 24. The low coherence optical radiation reflected or backscattered from the object 27 is then combined with said second beam of low coherence optical radiation, i.e. with the reference beam that has propagated counterclockwise in the reference loop/arm 23, by means of the second beam splitter 24. Part of the optical radiation, which is a result of said combining, passes through the first port 28 of the second beam splitter 24 to the second port 26 of the first beam splitter 21. Said part of optical radiation is then combined with the fourth beam of low coherence optical radiation, i.e. with the reference beam that has propagated clockwise in the reference loop/arm 23, by means of the first beam splitter 21. The first optical delay line 36 and the second optical delay line 37 provide a change in the difference between optical path lengths of the measuring arm 22 and the reference arm 23, respectively, with a constant velocity v, i.e. in-depth scanning of the object 27. Changing in the difference of the optical lengths of the measuring arm 22 and the reference arm 23 leads to interference modulation of the intensity of combined optical radiation at a third port 32 of the first beam splitter 21 and at a third port 34 of the second beam splitter 24 at a Doppler frequency $f = v/\lambda$.

Further operation of the optical interferometer shown in Fig. 2 is similar to that of the optical interferometer shown in Fig. 4.

The source 20, a first photodetector 33, a second photodetector 35, the first optical delay line 36, the second optical delay line 37 and the probe 38 can be made analogous to respective elements of the optical interferometer depicted in Fig. 4.

In preferred embodiments of the first and second modifications of the invention the probe, either the probe 19 of Fig. 4 or the probe 38 of Fig. 5, is made detachable and connected to the interferometer by a fiberoptic connecter. If the interferometer has polarization-maintaining fiber, the connector preferably should be polarization maintaining as well. The probe, either the probe 19 of Fig. 4 or the probe 38 of Fig. 5, can be implemented using any design known in the art, for example, an endoscope, endoscopic probe, catheter, guidewire, needle, or the probe (the probe 19 of Fig. 4 or the probe 38 of Fig. 5) may be implanted into the body, providing instant access to the internal organ. If the probe, either the probe 19 of Fig. 4 or the probe 38 of Fig. 5, is designed to image circumference (e.g., a catheter for intravascular imaging), it can be connected with the rest of the interferometer using a rotary connecter.

The probe, either the probe 19 of Fig. 4 or the probe 38 of Fig. 5, can include a lateral scanner, which can be made similar to that of the probe disclosed in RU Pat. No. 2,148,378.

In-depth scanning with a constant velocity in the optical interferometer implementing the first modification of the method for studying an object, as well as in the optical interferometer implementing the second modification can be carried out with a delay line (in Fig. 4 optical delay lines 17, 18 and in Fig. 5 optical delay lines 36, 37) used in any one arm of the interferometer. However, it is preferable that the optical delay lines 17, 18 and optical delay lines 36, 37 should contain a substantial amount of optical fiber and since another arm should have the same optical path and therefore similar amount of fiber it is beneficial to use this fiber to make the optical path modulation more efficient. For that reason in the preferred embodiments depicted in Fig. 4 and Fig. 5 two similar delay lines 17, 18 and delay lines 36, 37, respectively, are inserted into the reference arm 4, reference loop/arm 23, measuring arm 3 and measuring arm 22 (one into each arm) and driven synchronously with appropriate polarity to combine the effect. In-depth scanning can be carried out by phase modulation. In this case a phase modulator (not shown) can be placed into any arm, or into both arms in either the embodiment of Fig. 4 or Fig. 5.

It is well known that static and dynamic polarization distortions can occur in any interferometer arm, causing interference signal fading. This effect can happen in any interferometer configuration known in the art, as well as in the new interferometer disclosed here. To prevent or compensate for this problem, different means known in the art can be used. They include polarization-maintaining (birefrigent) or polarization-preserving (with high absorption for unwanted polarization) fibers, non-reciprocal elements (Faraday rotator), and polarization diversity receiver. Furthermore, polarization state modulation along with further extraction of polarization information from several sequentially acquired image frames may also be used. All the abovementioned means are compatible with the new interferometer design, as well as with previously disclosed designs found in the art. Also, polarization controllers and polarizers can be inserted into any arm to restore and rectify any required polarization state.

It is well known in the art that in order to achieve the best SNR possible, unequal splitting of the source power should be performed between the reference arm and the measuring arm. Disclosed modifications of the method and interferometer of the present invention, as well as Mach-Zehnder interferometer, are well suited for optimal power management, because splitting and mixing ratios are completely independent. For example, in the optical interferometer shown in Fig. 4, the first beam splitter 2 should be non-reciprocal, or otherwise, the first beam splitter 2 should be made polarization-dependent and a polarization-changing element, such as Faraday rotator, or birefrigent plate, or polarization controller (not shown in the drawings), should be installed into the measuring arm 3. Then all three available coupling ratios (the first beam splitter 2 way forward, the first beam splitter 2 way back and the second beam splitter 5) can be optimized taking into consideration light source power, central wavelength and bandwidth, optical losses in different elements, photodetector efficiency and dark noise level, photocurrent preamplifier noise (voltage and current) level, acquisition rate, etc. The calculation is not performed in this application being relatively straightforward and known in the art. For a typical optical coherence topography configuration with a several milliwatt power source in the spectral range of 800-1300 nm (central wavelength) and coherence length of 10-15 µm, the forward pass in the first beam splitter 2 should split more than 95% of the power into the measuring arm 3. In any case, as much power as possible should be directed from the measuring arm 3 into the first beam splitter 2 for further mixing with the reference beam. It should be noted that with any splitting ratios in the first beam splitter 2 the optical power reflected back to the source 1 is virtually zero since the power level reflected from a biotissue is rarely more than 0.1%. With optimal coupling even this negligible power will not go back to the source 1.

For the configuration of Fig. 5 the ratio can be optimized in substantially the same way by making the first beam splitter 21 and second beam splitter 24 non-reciprocal or polarization-dependent and by placing polarization-changing elements between the first beam splitter 21 and the second beam splitter 24 and/or into the measuring arm 22 and the reference loop/arm 23.

In both embodiments it may be convenient to have an additional slow delay line to compensate for a difference in distance between the probe 19 (Fig. 4), 38 (Fig. 5) and the object 8 (Fig. 4), 27 (Fig. 5), or change in probe-sample optical delay because of zoomed magnification, or variations in optical path length between different probes. This additional delay can be performed by inserting a piece of fiberoptic of given length into any arm by mechanical or fusion splicing, or by fiberoptic connectors. Also, the delay can be introduced by coupling the radiation into free space and back to the fiber and mechanically adjusting the gap where the collimated radiation propagates. The reflective mechanical delay line, similar to the design typically being used in the Michelson interferometer, can be used for that purpose if combined with an optical circulator, which can be as simple as one polarizer combined with a Faraday rotator or birefrigent quarter-wave plate. Such a design can be beneficial when polarization change in the arm is required. A reflective mechanical delay line can be constructed with substantially reduced sensitivity (2 orders of magnitude) to mechanical misalignments or vibrations by using a retroreflector ("cat eye" or retroreflecting prism), and therefore reduce technical requirements and cost for gap adjustment in an optomechanical system.

It is well known that in addition to optical path equality between both arms, a low coherence interferometer requires wave dispersion equality, because any difference in wave dispersion between arms causes cross-correlation broadening and axial (in depth) resolution degradation. To compensate the dispersion difference between arms, in-line fiberoptic element(s) can be inserted by mechanical or fusion splicing, or by fiberoptic connectors. These elements can be constructed from pieces of optical fibers with dispersion properties different from the rest of the interferometer. Also, radiation in any arm can be coupled from the optical fiber into free space and then coupled back into the optical fiber. Appropriate bulk optical element(s) for dispersion compensation can be placed into the free space gap, where radiation is collimated (preferably) or focused/defocused. Such an element can be combined with the abovementioned mechanical optical delay line, either unidirectional or bi-directional.

Industrial Applicability

The invention can be used in devices for studies of internal structures of objects by optical means, namely in low coherence reflectometers and devices for optical coherence tomography applied, for example, for medical diagnostics of individual organs and systems including in vivo or in vitro diagnostics, as well as for industrial diagnostics such as control of technological processes. It should be noted that the invention can be implemented with using standard means.

**Claims**

**1.**   A method for studying an object comprising the steps of forming a low coherence optical radiation, splitting the low coherence optical radiation into a first beam of the low coherence optical radiation and second beam of the low coherence optical radiation, directing the first beam of the low coherence optical radiation towards the object under study along a measuring optical path, directing the second beam of the low coherence optical radiation along a reference optical path, combining the low coherence optical radiation, which passed along the measuring optical path with the low coherence optical radiation, which passed along the reference optical path, and visualizing the intensity of the low coherence optical radiation, which having passed along the measuring optical path carries information about the object, using for that at least one signal of interference modulation of the intensity of the low coherence optical radiation, which is a result of said combining, **characterized in that** the first beam of the low coherence optical radiation passes along the measuring optical path, which is bi-directional, in a forward and backward direction, whereas the second beam of the low coherence optical radiation passes along the reference optical path, which is unidirectional, in a forward direction.

**2.**   A method as claimed in claim 1, further comprising the step of changing the difference in the optical path lengths for the first and second low coherence optical radiation beams for performing in-depth scanning of the object.

**3.**   A method as claimed in claim 1, or in claim 2, wherein the difference in the optical lengths of the optical paths for the first and second low coherence optical radiation beams is changed by at least several tens of wavelengths of low coherence optical radiation.

**4.**   A method as claimed in claim 1, or in claim 2, or in claim 3, wherein the first beam of the low coherence optical radiation being directed to the object under study is scanned in compliance with a predetermined rule over a surface, which is approximately perpendicular to the direction of propagation of the first beam.

**5.**   A method as claimed in claim 1, or in claim 2, or in claim 3, or in claim 4, wherein the object under study is a biotissue of a living body.

**6.**   A method as claimed in claim 1, or in claim 2, or in claim 3, or in claim 4, or in claim 5, wherein the object under study is a biotissue lining the surfaces of cavities and internal organs of a living body.

**7.**   A method as claimed in claim 1, or in claim 2, or in claim 3, or in claim 4, or in claim 5, or in claim 6, wherein the low coherence optical radiation is an optical radiation in the visible or near IR range.

8. A method for studying an object comprising the steps of forming a low coherence optical radiation, which is split into a first beam of the low coherence optical radiation and second beam of low coherence optical radiation, directing the first beam of the low coherence optical radiation along a measuring optical path, directing the second beam of the low coherence optical radiation along a reference optical path, combining the low coherence optical radiation, which passed along the measuring optical path with the low coherence optical radiation, that has propagated along the reference path, and visualizing the intensity of the low coherence optical radiation, which having passed along the measuring optical path carries information about the object, using for that at least one signal of interference modulation of intensity of the optical radiation, which is a result of said combining, **characterized in that** the reference optical path is formed as a loop, the first beam of the low coherence optical radiation is split into a third beam of the low coherence optical radiation and fourth beam of low coherence optical radiation, the third beam of the low coherence optical radiation is directed towards the object, the fourth beam of the low coherence optical radiation is directed clockwise in the reference loop, while the second beam of the low coherence optical radiation is directed counterclockwise in the reference loop, the third beam of low coherence optical radiation propagates along the measuring optical path in a forward and backward direction, the measuring optical path being bi-directional, whereas the low coherence optical radiation, which returned from the object, is then combined with the second beam of low coherence optical radiation, which has propagated counterclockwise in the reference loop, and part of the optical radiation, which is a result of said combining, is further combined with the fourth beam of the low coherence optical radiation that has propagated clockwise in the reference loop.

9. An optical interferometer comprising a source of optical radiation, a first beam splitter, a measuring arm, and a reference arm, a second beam splitter, and at least one photodetector connected to a respective port of the second beam splitter, **characterized in that** the measuring arm is bi-directional, whereas the reference arm is unidirectional.

10. An optical interferometer as claimed in claim 9, wherein at least one of the arms of the optical interferometer comprises an optical delay line.

11. An optical interferometer as claimed in claim 9, wherein at least one of the arms of the optical interferometer comprises a phase modulator.

12. An optical interferometer as claimed in claim 9, or in claim 10, or in claim 11, wherein the measuring arm is provided with a probe located at its distal end.

13. An optical interferometer as claimed in claim 9, or in claim 10, or in claim 11, or in claim 12, wherein at least a part of the measuring arm comprising the probe is designed fiberoptic.

14. An optical interferometer as claimed in claim 9, or in claim 10, or in claim 11, or in claim 12, wherein at least one of the arms of the optical interferometer is designed fiberoptic.

15. An optical interferometer as claimed in claim 9, or in claim 10, or in claim 11, or in claim 12, in claim 13, in claim 14, wherein at least one of the beam splitters is designed fiberoptic.

16. An optical interferometer as claimed in claim 9, or in claim 10, or in claim 11, or in claim 12, in claim 13, in claim 14, or in claim 15, wherein the probe is made detachable and connected with the rest of the optical interferometer by a connecter.

17. An optical interferometer as claimed in claim 9, or in claim 10, or in claim 11, or in claim 12, in claim 13, in claim 14, or in claim 15, or in claim 16, wherein the first beam splitter is designed nonreciprocal.

18. An optical interferometer as claimed in claim 9, or in claim 10, or in claim 11, or in claim 12, in claim 13, in claim 14, or in claim 15, or in claim 16, or in claim 17, wherein the first beam splitter is designed polarization-sensitive and the measuring arm is provided with a polarization switch.

19. An optical interferometer comprising a source of optical radiation, a first beam splitter, a measuring arm and a reference arm, a second beam splitter, the first beam splitter being optically coupled to the object through the ports of the second beam splitter, and at least one photodetector, **characterized in that** the measuring arm is bi-directional, while the reference arm is formed as a loop, whereas the first beam splitter is optically coupled to the object through the ports of the second beam splitter, and at least one of the beam splitters is optically coupled to a respective photodetector.

20. An optical interferometer as claimed in claim 19, wherein at least one of the arms of the optical interferometer comprises an optical delay line.

21. An optical interferometer as claimed in claim 19, wherein at least one of the arms of the optical interferometer comprises a phase modulator.

**22.** An optical interferometer as claimed in claim 19, or in claim 20, or in claim 21, wherein the measuring arm is provided with a probe located at its distal end.

**23.** An optical interferometer as claimed in claim 19, or in claim 20, or in claim 21, or in claim 22, wherein at least a part of the measuring arm comprising the probe is designed fiberoptic.

**24.** An optical interferometer as claimed in claim 19, or in claim 20, or in claim 21, wherein at least one of the arms of the optical interferometer is designed fiberoptic.

**25.** An optical interferometer as claimed in claim 19, or in claim 20, or in claim 21, or in claim 22, or in claim 23, or in claim 24, wherein at least one of the beam splitters is designed fiberoptic.

**26.** An optical interferometer as claimed in claim 19, or in claim 20, or in claim 21, or in claim 22, or in claim 23, or in claim 24, or in claim 25, wherein the probe is made detachable and connected with the rest of the optical interferometer by a connecter.

**27.** An optical interferometer as claimed in claim 19, or in claim 20, or in claim 21, or in claim 22, or in claim 23, or in claim 24, or in claim 25, in claim 26, wherein the first beam splitter is designed nonreciprocal.

**28.** An optical interferometer as claimed in claim 19, or in claim 20, or in claim 21, or in claim 22, or in claim 23, or in claim 24, or in claim 25, in claim 26, or in claim 27, wherein the first beam splitter is designed polarization-sensitive and the measuring arm is provided with a polarization switch.

Fig. 1.

Fig. 2.

low coherence source

$\alpha_1/(1-\alpha_1)$

$\alpha_2/(1-\alpha_2)$

reference

$D_1$

$\Sigma$

$D_2$

Fig. 3

Fig. 4

Fig. 5

## INTERNATIONAL SEARCH REPORT

| International application No. |
| --- |
| PCT/RU 03/00041 |

**A. CLASSIFICATION OF SUBJECT MATTER**

G01B 9/02

According to International Patent Classification (IPC) or to both national classification and IPC

**B. FIELDS SEARCHED**

Minimum documentation searched (classification system followed by classification symbols)

G01B 9/00, 9/02, 11/00, 11/22, G01N 21/00, G02B 26/00-26/08, 27/00, 27/09-27/14, G01J 9/02, G02F 1/01

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | US 5291267 A (HEWLETT-PACKARD COMPANY) Mar. 1, 1994,<br>columns 2-4, figures 1-5 | 1-3, 7, 9-16<br>4-6, 8, 19-26<br>17-18, 27-28 |
| Y<br>A | RU 2100787 C1 (INZHEGORODSKY TSENTR INKUBATSII<br>NAUKOEMKIKH TEKHNOLOGII et al) 27.12.1997, the abstract, pages 4-8 | 4-6, 8, 19-26<br>17-18, 27-28 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 May 2003 (20.05.03) | 29 May 2003 (29.05.03) |

| Name and mailing address of the ISA/ | Authorized officer |
| --- | --- |
| RU | |
| Facsimile No. | Telephone No. |

Form PCT/ISA/210 (second sheet) (July 1992)